(19) **Europäisches Patentamt / European Patent Office / Office européen des brevets**

(11) **EP 2 302 338 A1**

(12) **EUROPÄISCHE PATENTANMELDUNG**

(43) Veröffentlichungstag:
   **30.03.2011 Patentblatt 2011/13**

(51) Int Cl.:
   ***G01F 23/284*** (2006.01)

(21) Anmeldenummer: **09012191.4**

(22) Anmeldetag: **25.09.2009**

(84) Benannte Vertragsstaaten:
   **AT BE BG CH CY CZ DE DK EE ES FI FR GB GR HR HU IE IS IT LI LT LU LV MC MK MT NL NO PL PT RO SE SI SK SM TR**
   Benannte Erstreckungsstaaten:
   **AL BA RS**

(71) Anmelder: **Gottfried Wilhelm Leibniz Universität Hannover**
   **30167 Hannover (DE)**

(72) Erfinder:
   • **Armbrecht, Gunnar**
   **D-30451 Hannover (DE)**

   • **Denicke, Eckhard**
   **29690 Gilten (DE)**

(74) Vertreter: **Gerstein, Hans Joachim et al**
   **Gramm, Lins & Partner GbR**
   **Freundallee 13a**
   **30173 Hannover (DE)**

Bemerkungen:
   Geänderte Patentansprüche gemäss Regel 137(2) EPÜ.

(54) **Verfahren zur Eigenschaftsbestimmung von Medien und Messeinrichtung hierzu**

(57)   Ein Verfahren Bestimmung mindestens einer Eigenschaft mindestens eines Mediums (2) mittels Radarmessung durch

- Aussenden mindestens eines Radarsignals (6) in mindestens einen das Medium (2) enthaltenen Behälterabschnittes (4, 9),
- Empfangen mindestens eines Antwortsignals (10) als Reflexion eines zugeordneten Radarsignals (6), und
- Bestimmen der Eigenschaft des mindestens einen Mediums (2) in Abhängigkeit von charakteristischen Eigenschaften des mindestens einen Antwortsignals (10) in Bezug auf das zugehörige Radarsignal (6),

wird beschrieben.

Das Verfahren hat die weiteren Schritte
- Bestimmen der Signalähnlichkeit zwischen dem mindestens einen Antwortsignal (10) und zugeordneten Referenzantwortsignalen und
- Bestimmen der mindestens einen Eigenschaft in Abhängigkeit der Signalähnlichkeit zwischen dem jeweiligen mehrere Antwortpulse aufweisenden Antwortsignal (10), wobei die Antwortpulse eine aufgrund unterschiedlicher Ausbreitungsgeschwindigkeiten charakteristische Laufzeitverschiebung in Bezug auf das Radarsignal (6) aufweisen, und/oder mindestens einen Antwortpuls aufweisenden Antwortsignal (10), wobei der mindestens eine Antwortpuls eine in Abhängigkeit von der mindestens einen Eigenschaft in Bezug auf einen ursächlichen Radarpuls verzerrte Form hat, und den an angenommene Eigenschaften angepassten Referenzantwortsignalen.

Fig. 1

**Beschreibung**

Die Erfindung betrifft ein Verfahren zur Bestimmung mindestens einer Eigenschaft mindestens eines Mediums mittels Radarmessung durch

- Aussenden mindestens eines Radarsignals in mindestens einen das Medium enthaltenen Behälterabschnittes,
- Empfangen mindestens eines Antwortsignals als Reflexion eines zugeordneten Radarsignals, und
- Bestimmen der Eigenschaft des mindestens einen Mediums in Abhängigkeit von charakteristischen Eigenschaften des mindestens einen Antwortsignals in Bezug auf das zugehörige Radarsignal.

Die Erfindung betrifft weiterhin eine Messeinrichtung zur Bestimmung mindestens einer Eigenschaft mindestens eines Mediums mit mindestens einem Signalgeber zum Aussenden von Radarsignalen in jeweils einen das mindestens eine Medium enthaltenen Behälterabschnitt, mit mindestens einem Signalempfänger zum Empfangen mindestens eines Antwortsignals auf die ausgesendeten Radarsignale, und mit mindestens einer Signalauswerteinheit zum Bestimmen mindestens einer Eigenschaft des mindestens einen Mediums in Abhängigkeit von charakteristischen Eigenschaften des mindestens einen Antwortsignals in Bezug auf das zugehörige Radarsignal.

In der industriellen Prozessmesstechnik wird oftmals eine kontaktlose und verschleißarme Messung von Eigenschaften eines Mediums, wie z. B. die Füllstandsmessung oder Messung elektromagnetischer Materialparameter benötigt. Hierzu ist hinreichend bekannt, Radarsysteme einzusetzen. Die zur Bestimmung von Tankfüllständen verwendeten Radarsysteme lassen sich im Wesentlichen in zwei Arten unterteilen, nämlich freiabstrahlende Radarsysteme und leitungsgeführte Radarsysteme. Die leitungsgeführten Radarsysteme besitzen den Vorteil, dass die Messsignale nur in einem geringen Maß von Störreflexionen durch Einbauten im Behältertank betroffen sind, da das Radarsignal mittels eines Wellenleiters direkt zu dem zu detektierenden Füllstandsniveau des Mediums geführt wird. Die definierten Messbedingungen solcher leitungsgeführten Radarsysteme erhöhen jedoch nur im speziellen Fall von dispersionsfreien Wellenleitern die Messgenauigkeit und damit verbunden die Messzuverlässigkeit.

Grundsätzlich wird bei der Füllstandsmessung mittels Radarsystemen ein Radarsignal mit mindestens einem charakteristischen Messpuls in Richtung der Erstreckungsrichtung lotrecht zur Oberfläche des Mediums in den Behälterabschnitt abgestrahlt. Das Füllstandsniveau wird anhand der Laufzeit eines nach Auftreffen an der Oberfläche des Mediums, dessen Füllstandsniveau zu bestimmen ist, reflektierten Messpulses bestimmt. Das Abstrahlen des Messpulses kann dabei vom Behälterdeckel nach unten auf die Oberfläche des Mediums oder vom Behälterboden durch das Medium hindurch zur Oberfläche des Mediums erfolgen. Signalgeber und Signalempfänger sind dabei im gleichen Bereich angeordnet, um die Reflexionen der vom Signalgeber ausgesendeten Messpulse erfassen zu können.

Nach dem Radar-Prinzip arbeitende Füllstandsmessgeräte sind beispielsweise aus der DE 10 2007 010 468 A1 und DE 10 2007 007 024 A1 bekannt.

In der DE 10 2007 010 627 A1 wird vorgeschlagen, eine elektrische Leiteranordnung zum Führen eines elektromagnetischen Signals in den Behälter hinein und zum Leiten eines reflektiertem Anteils des elektromagnetischen Signals aus dem Behälter heraus vorzusehen. Die elektrische Leiteranordnung soll dabei in die Wand des Behälters integriert werden.

Als derartige elektrische Leiteranordnung können aber auch so genannte Schwall- oder Bypassrohre zum Einsatz kommen, die zumeist permanent im Tank eingebaut sind. Dabei werden die speziellen Hochfrequenzeigenschaften von Schwallrohren ausgenutzt, die Rundhohlleitungen darstellen, in denen sich hochfrequente elektromagnetische Wellen ausbreiten. Die Messgenauigkeit und Messzuverlässigkeit ist a priori allerdings, obgleich der definierten Messbedingungen, schlechter im Vergleich zu freiabstahlenden Radarmesssystemen.

Die Ursache hierfür liegt in den elektromagnetischen Eigenschaften solcher Hohlleitungen, in denen sich das Gesamtfeld aus einer Vielzahl von elektromagnetischen Feldmoden zusammensetzt, die die Eigenschaften besitzen, sich unabhängig voneinander mit stark frequenzabhängiger Ausbreitungsgeschwindigkeit (chromatische Dispersion) auszubreiten. Die Anzahl der sich ausbreitenden Feldmoden wird in der Realität durch die Güte des verwendeten Wellenübergangs und dessen Modenanregungsverhalten bestimmt. Dispersions-und Multimoden-Ausbreitungseffekte sind dafür verantwortlich, dass das ausgesendete Messsignal, welches für gewöhnlich mehrere GHz an Bandbreite aufweist, moden-, füllstand- und medienabhängig verzerrt wird. Damit wird unter Verwendung gleicher Radar-Hardware wie im Freiraumfall, d. h. z. B. mit gewöhnlichen Hornantennen, und identischer Auswertealgorithmen, wie z. B. Pulsschwerpunkt basierten Laufzeitauswertungen, eine Messgenauigkeit im Submillimeterbereich unmöglich gemacht.

G. Armbrecht, E. Denicke, I. Rolfes, N. Pohl, T. Musch und B. Schiek: Compact mode-matched excitation structures for radar distance measurements in overmoded circular waveguides, in: Advances in Radio Science, Vol. 6, Seiten 9-17, 2008 offenbart eine Verwendung von Mode-angepassten Wellenübergängen, um eine möglichst reine Nutzmodenanregung im Schwallrohr zu ermöglichen. Dies soll beispielsweise durch Kombination einer parabolischen Randkontur mit einem metallischen Streukörper erreicht werden. Im Falle modenreiner Wellenübergänge sind dann keinerlei Änderungen an der Radarsignalverarbeitung notwendig und herkömmliche Auswertealgorithmen, die lediglich geringe Rechenkapazitäten benötigen und damit einen geringen Leistungsbedarf haben und die für freiabstrahlende Radarmessungen optimiert sind, können verwendet werden. Das Problem ist jedoch, dass die Signalgeber speziell im Bereich der Wellenübergänge angepasst werden müssen und keine ggf. vorhandenen, für die freiabstrahlende Radarmessung optimierten Antennen eingesetzt werden können.

Ein weiteres Problem besteht darin, dass die Multimoden-Ausbreitung innerhalb einer solchen Hohlleitung zwangsläufig im Fall verlustloser Wellenübergänge zu einer Fehlanpassung führt, bei der ein Teil sowohl der Nutzmodeenergie wie auch der parasitären Modeenergie im Schwallrohr verbleibt, am Wellenübergang reflektiert wird und ein weiteres Mal das Schwallrohr durchläuft. Da das Schwallrohr die jeweiligen Modeamplituden lediglich geringfügig dämpft, entstehen sogenannte Replika mit nennenswerter Signalamplitude. Insbesondere wenn unmodifizierte Freiraum-Radargeräte zum Einsatz kommen, die über hardwareseitig eingebaute und nicht abschaltbare räumliche Filter, so genannte $r^2$-Filter, verfügen, mit denen im Freifeld für gewöhnlich die quadratisch zur Entfernung anwachsende Funkfelddämpfung ausgeglichen wird, sind die Peak-Amplituden der Replika mit denen der zu detektierenden Nutzpulse vergleichbar. Daher kann es passieren, dass die Replikaamplituden die Nutzmodeamplituden übersteigen, was zum Ausrasten einer auf den Nutzmode eingerasteten Signalverarbeitung führt und fälschlicherweise in einer sprunghaften Füllstandsänderung und somit in einer erheblichen Herabsetzung der Messzuverlässigkeit resultiert. Dieser Effekt führt insbesondere im Nahbereich des Signalgebers/Wellenübergangs bei hohen Füllständen zu Problemen, da Replika nicht durch Plausibilitätsüberprüfung im Bezug auf die Gesamtlänge des Rohres ausgeschlossen werden können.

In B. Sai und B. Kastelein: Advanced High Radar Gauge for Industrial Applications, in: International Conference on Radar, 2006, CIE'06, Seiten 1 bis 4 wird die Signalauswertung unter Einbeziehung der Phase bei der Radar-Füllstandsmessung vorgeschlagen.

In N. Pohl, M. Gerding, B. Will, T. Musch, J. Hausner: High Precision Radar Distance Measurements in Overmoded Circular Waveguides, in IEEE Transactions on Microwave Theory and Techniques, Vol. 55, No. 6, Juni 2007, Seite 1374-1380 wird zur Entfernungsmessung in rohrförmigen Multimode-Wellenleitern vorgeschlagen, den durch Dispersion und Multimode-Ausbreitung verursachten Problemen durch modenangepasste Antennen zu begegnen.

Eine solche modenangepasste Antenne ist z. B. in DE 20 2008 016 100 U1 beschrieben.

Ausgehend hiervon ist es Aufgabe der vorliegenden Erfindung, ein verbessertes Verfahren zur Bestimmung mindestens einer Eigenschaft mindestens eines Mediums mittels Radarmessung sowie eine verbesserte Messeinrichtung hierzu zu schaffen, die eine präzise Bestimmung beispielsweise des Füllstandsniveaus auch ohne aufwendige Antennenanpassung ermöglicht.

Die Aufgabe wird durch das Verfahren der eingangs genannten Art gelöst durch:

- Bestimmen der Signalähnlichkeit zwischen dem mindestens einen Antwortsignal und zugeordneten Referenzantwortsignalen und
- Bestimmen der mindestens einen Eigenschaft in Abhängigkeit der Signalähnlichkeit zwischen dem jeweiligen mehrere Antwortpulse aufweisenden Antwortsignal, wobei die Antwortpulse eine aufgrund unterschiedlicher Ausbreitungsgeschwindigkeiten charakteristische Laufzeitverschiebung in Bezug auf das Radarsignal aufweisen, und/oder mindestens einen Antwortpuls aufweisenden Antwortsignal, wobei der mindestens eine Antwortpuls eine in Abhängigkeit von der mindestens einen Eigenschaft in Bezug auf einen ursächlichen Radarpuls verzerrte Form hat, und den an angenommene Eigenschaften angepassten Referenzantwortsignalen.

Im Unterschied zu den herkömmlichen, auf die Unterdrückung von störenden Moden ausgerichteten Verfahren wird mit der vorliegenden Erfindung vorgeschlagen, die Existenz mehrerer durch unterschiedliche Ausbreitungsgeschwindigkeiten charakterisierte Antwortpulse, wie z. B. die Antwortpulse aufgrund einer Multimode-Ausbreitung des Radarsignals und/oder eine Pulsverformung zur Erhöhung der Genauigkeit der Bestimmung der zu bestimmenden Eigenschaft, wie z. B. des Füllstandsniveaus, auszunutzen. Aufgrund der unterschiedlichen Ausbreitungsgeschwindigkeiten der Signalanteile des mindestens einen Antwortsignals führt eine gewöhnliche Schwerpunktsauswertung zu einem erheblichen Ansteigen des Messfehlers im Vergleich zur Messung und Auswertung eines einzigen Antwortpulses auf einen Messpuls ohne Störung durch weitere Moden. Die durch die mehreren durch unterschiedliche Ausbreitungsgeschwindigkeiten charakterisierten Antwortpulse führen jedoch zu einer erhöhten Messgenauigkeit, wenn die Korrelation des mindestens einen Antwortsignals mit zugeordneten Referenzantwortsignalen, d. h. der Grad der Signalähnlichkeit bestimmt wird.

Durch die dispersiven Hohlleiter-Ausbreitungseigenschaften jedes einzelnen Feldmodes an sich (chromatische Dispersion) entsteht eine Unschärfe des mindestens einen auszuwertenden Antwortpulses bedingt durch eine Verschleifung der Pulsform (Zerfließen) aufgrund der unterschiedlichen, frequenzabhängigen Ausbreitungsgeschwindigkeiten der Signalanteile des jeweiligen Feldmodes und/oder der dispersiven Eigenschaften der Medien, in denen sich die elektromagnetische Welle ausbreitet. Diese Unschärfe wird gezielt dadurch ausgenutzt, dass das Verschleifen der Antwortpulse direkt mittels einer Korrelationsbildung zur Bestimmung von Signalähnlichkeiten ausgewertet wird. Bei simultaner Mehrmodenanregung treten zusätzlich intermodale Verzerrungseffekte bei einer etwaigen Überlagerung eines aus mehreren Antwortpulses des sich in unterschiedlichen Feldmoden ausbreitenden Multimoden-Antwortsignals auf. Während eine Zeit-Entfernungsumrechnung mittels eines einzelnen Zeitpunktes aufgrund der Aufspreizung der Signalenergie nicht mehr möglich ist, wird bei der Korrelationsbildung ausgenutzt, dass eine individuelle Pulsform im dispersiven System eindeutig mit der Entfernung verknüpft ist. Bei der Bestimmung der Signalähnlichkeiten zwischen des mindestens einen Antwortsignals mit zugeordneten Referenzantwortsignalen wird nicht nur das zeitliche Auftreten der Antwortpulse im Empfangssignal absolut und/oder relativ in ihrer Lage zueinander, sondern auch die Form des empfangenen Antwortsignals mit der Form mehrerer Referenzantwortsignale verglichen bzw. korreliert. Das zur tatsächlichen Eigenschaft, wie z. B. Entfernung, passende Referenzantwortsignal bildet mit dem empfangenen Antwortsignal die "Quasi"-Autokorrelation. Je deutlicher sich diese von den Kreuzkorrelationen absetzt, desto robuster und genauer funktioniert das korrelationsbasierte Verfahren zur Eigenschaftsbestimmung. Die Erhöhung der Eindeutigkeit wird durch Ausnutzen der in den herkömmlichen Verfahren als parasitär einzustufenden Multimoden und/oder Pulsverformungen erreicht. Eine möglichst hohe Anzahl angeregter Feldmoden ist hierbei nun explizit erwünscht.

Unter Behälterabschnitt ist nicht nur ein separater Teilbereich eines Behälters, wie z. B. ein Schwallrohr zu verstehen, sondern auch ein Teil oder das gesamte Tankvolumen eines Behälters, in dem sich das Medium befindet, ausgenommen externe Bereiche des Behälters in denen sich die Radarmessung nicht auswirkt.

Die zugeordneten und an die angenommenen Eigenschaften angepassten Referenzantwortsignale können entweder messtechnisch oder mittels simulatorischer Nachbildung (Systemsimulation) des Behälterabschnitts einschließlich der gezielten Einbeziehung aller möglichen Referenzfüllstände und/oder der elektromagnetischen Materialparameter des von mindestens einem Medium durchsetzten Bereiches des zur Messung verwendeten Behälterabschnittes, in dem die Radarmessung durchgeführt wird, gewonnen werden.

Eigenschaften des Mediums oder eines Gemischs, einer Emulsion oder Schichtung mehrerer Medien können das Füllstandsniveau in den jeweiligen Behälterabschnitt, in dem die Messung durchgeführt wird, und/oder elektromagnetische Parameter des mindestens einen Mediums sein. Bei übereinandergeschichteten Medien können aus mehreren Impulsen auch die jeweiligen Füllstandsniveaus der einzelnen Medien detektiert werden.

Bei der Bestimmung der Signalähnlichkeit können die Antwortsignalabschnitte berücksichtigt werden, die durch Reflexionen des Radarsignals auf der auf einem Füllstandsniveau befindlichen Oberfläche des Mediums beeinflusste Antwortpulse enthalten. Vorzugsweise wird die Bestimmung der Signalähnlichkeit auf einen Antwortsignalabschnitt beschränkt, so dass Störeinflüsse anderer Antwortsignalabschnitte eliminiert werden.

Bei der Bestimmung der Signalähnlichkeit können auch die Antwortsignalabschnitte berücksichtigt werden, die durch Reflexionen des Radarsignals an Trennschichten zwischen mehreren geschichteten Medien und/oder an den Behälterabschnitt angeordneten Reflektoren, wie beispielsweise den Boden des Behälterabschnitts, beeinflusste Antwortpulse enthalten. Auch hier kann das Antwortsignal bei der Signalähnlichkeitsbestimmung auf einen solchen Antwortsignalabschnitt eingeschränkt werden, um den Einfluss von Störungen im Antwortsignal sowie den Rechneraufwand zu reduzieren.

Besonders vorteilhaft ist es, wenn sich das Radarsignal in dem Behälterabschnitt in mehreren Moden des elektromagnetischen Feldes ausbreitet und ein

Antwortsignal hierdurch mehrere Antwortpulse aufweist, die durch unterschiedliche Ausbreitungsgeschwindigkeiten der Moden-abhängigen Signalanteile des Radarsignals charakterisiert sind. Dann wird die Signalähnlichkeit zwischen dem mehrere Antwortpulse aufweisenden Antwortsignals und an angenommene Eigenschaften angepassten Multimode-Referenzantwortsignalen bestimmt, und auf die Eigenschaften geschlossen, die den bestmöglich angepassten Referenzantwortsignal zugrunde liegen. Die Bestimmung der Signalähnlichkeit erfolgt somit mit Hilfe mehrerer Referenzantwortsignale, die sich durch von unterschiedlich angenommenen Eigenschaften beeinflusste Parameter unterscheiden. Jede dieser Mehrzahl von Referenzantwortsignalen ist daher durch einen anderen Wert der zu bestimmenden Eigenschaften charakterisiert. So kann z. B. zur Bestimmung des Füllstandsniveaus für eine Menge diskreter Füllstandsniveaus eine Menge von Referenzantwortsignalen simuliert oder gemessen werden. Das Antwortsignal wird dann mit dieser Menge von Referenzantwortsignalen oder einer Auswahl aus dieser Menge verglichen. Das dem bestangepassten Referenzantwortsignal zugrunde liegende Füllstandsniveau wird dann als tatsächlich vorliegendes Füllstandsniveau angenommen. Der zu bestimmende Wert der Eigenschaft ist somit der dem bestmöglich angepassten Referenzantwortsignal zugrunde liegende Wert der Eigenschaft, wie beispielsweise das Füllstandsniveau oder die Größe bestimmter elektromagnetischer Materialparameter.

Dieses Verfahren kann mit nicht angepassten Antennen ohne Unterdrückung mehrerer Feldmoden ausgeführt werden, wobei die mehreren Feldmoden bei der Auswertung eines Antwortsignals auf ein Radarsignal mit einem Messpuls ausgenutzt werden.

Denkbar ist aber auch, dass mehrere Messungen voneinander unabhängig, zeitlich parallel oder hintereinander derart durchgeführt werden, dass mindestens zwei sich voneinander unterschiedlich ausbreitende Radarsignale in mindestens einen Behälterabschnitt ausgesendet werden. Die Eigenschaften werden dann aus der Gesamtheit der jeweils mindestens einen Antwortpuls enthaltenden Antwortsignale anhand der Signalähnlichkeit zwischen den Antwortsignalen bzw. im Fall von mindestens zwei unverzerrten Pulsen, d. h. wenn das Einzelsignal alleine kein gültiges Antwortsignal darstellt, das Gesamtsignal und die jeweiligen, an angenommene Eigenschaften angepassten Referenzantwortsignalen bestimmt und es wird auf die Eigenschaften geschlossen, die dem bestmöglich angepassten Referenzantwortsignalen zugrunde liegen.

Die mindestens zwei unabhängig von einander ausgesendeten Radarsignale können sich aber auch z. B. durch ihre Feldmoden voneinander unterscheiden. Die Radarsignale können dabei entweder in denselben Behälterabschnitt unabhängig voneinander abgestrahlt werden oder in separate Behälterabschnitte mit gleichartiger oder unterschiedlicher Beschaffenheit der Behälterabschnitte oder darin eingebrachter Wellenleiter. Die mehreren Radarsignale werden in einer der letztgenannten Alternative somit in mindestens zwei Behälterabschnitte ausgesendet, wobei die Ausbreitungsgeschwindigkeit der Radarsignale in den mindestens zwei Behälterabschnitten aufgrund einer unterschiedlichen Ausbildung der Behälterabschnitte, d. h. auch u. U. einer unterschiedlichen Ausbildung der darin eingebauten Wellenleiter, voneinander unterschiedlich ist.

Radarsignale in mindestens zwei sich durch das Ausbreitungsverhalten der Radarsignale unterscheidenden Behälterabschnitten ausgesendet werden. Dann werden die Antwortsignale auf die mindestens zwei Radarsignale zur Bestimmung der Eigenschaften ausgewertet, indem die Signalähnlichkeit zwischen den Antwortsignalen und den jeweilig, an angenommene Eigenschaften angepassten Referenzantwortsignalen bestimmt und auf die Eigenschaften geschlossen wird, die den bestmöglich angepassten Referenzantwortsignalen zugrunde liegen. Dabei wird - vergleichbar zu der Existenz mehrer Antwortpulse aufgrund unterschiedlicher Feldmoden - die Existenz mehrerer, durch unterschiedliches Ausbreitungsverhalten charakterisierte Antwortpulse, oder charakteristische Pulsverformungen eines oder mehrerer Antwortpulse ausgenutzt, um die Präzision des Füllstandsmessverfahrens zu erhöhen.

Dabei ist es denkbar, dass die Antwortsignale voneinander unabhängig jeweils durch Bestimmen der Signalähnlichkeiten mit zugeordneten Referenzsignalen ausgewertet werden. Die Antwortsignale der einzelnen Messungen werden dann mit zugeordneten Referenzantwortsignalen korreliert, um jeweils die bestmögliche Übereinstimmung und die den bestangepassten Referenzantwortsignalen zugrunde liegenden Eigenschaftswerte zu finden. Die Ergebnisse, d. h. die Eigenschaftswerte, werden dann zusammengeführt, um beispielsweise durch Mittelwertbildung der einzelnen Eigenschaften (z. B. Laufzeiten bzw. daraus abgeleiteten Füllstandsniveaus) einen möglichst genauen Eigenschaftswert zu bestimmen.

Gleichermaßen können die mehreren Antwortsignale jedoch auch zu einem gemeinsamen Antwortsignal zusammengeführt und dieses Gesamtsignal durch Bestimmen der Signalähnlichkeit zwischen dem Gesamtsignal und zugeordneten Referenzantwortsignalen ausgewertet werden.

Bei der Bestimmung der Signalähnlichkeiten von Antwortsignalen und Referenzantwortsignalen wird in der Regel die Übereinstimmung des Antwortsignals mit einem Referenzantwortsignal im Zeitbereich bestimmt. Denkbar ist jedoch auch eine Bestimmung der Signalähnlichkeit im Frequenzbereich nach Überführung des Antwortsignals vom Zeitbereich in den Frequenzbereich. Das Radarsignal kann auch direkt im Frequenzbereich ausgesendet und ohne Überführung dort direkt verglichen bzw. das als Frequenzbereichssignal ausgesendete Radarsignal in ein Zeitbereichssignal überführt werden.

Das Aussenden der Radarsignale kann entweder in einem Behälterabschnitt erfolgen, der selbst einen vorzugsweise Multimode-fähigen Wellenleiter bildet, denkbar ist jedoch auch, in den Behälterabschnitt einen Wellenleiter einzubringen.

Als Behälterabschnitt, in dem die Radarmessung zur Bestimmung von Eigenschaften durchgeführt wird, kann z. B. ein mit dem Behälter kommunizierendes Schwallrohr und/oder der Behälter selbst als Wellenleiter gewählt werden. Das Aussenden der Radarsignale erfolgt dann in Längserstreckungsrichtung im Innenraum des Schwallrohres selbst. Das heißt, dass die Radarsignale wie bei Radar-Füllstandsmessungen üblich in Richtung des Füllstandspegels, d. h. in eine Messrichtung lotrecht zur Oberfläche des Mediums, abgestrahlt werden. Die Aufgabe wird weiterhin durch die Messeinrichtung zur Bestimmung mindestens einer Eigenschaft mindestens eines Mediums der eingangs genannten Art dadurch gelöst, dass die Signalauswerteeinheit zur Durchführung des oben beschriebenen Verfahrens mit den Schritten:

- Bestimmen der Signalähnlichkeit zwischen dem mindestens einen Antwortsignal und zugeordneten Referenzantwortsignalen und

- Bestimmen der mindestens einen Eigenschaft in Abhängigkeit der Signalähnlichkeit zwischen dem jeweiligen mehrere Antwortpulse aufweisenden Antwortsignal, wobei die Antwortpulse eine aufgrund unterschiedlicher Ausbreitungsgeschwindigkeiten charakteristische Laufzeitverschiebung in Bezug auf das Radarsignal aufweisen, und/oder mindestens einen Antwortpuls aufweisenden Antwortsignal, wobei der mindestens eine Antwortpuls eine in Abhängigkeit von der mindestens einen Eigenschaft in Bezug auf einen ursächlichen Radarpuls verzerrte Form hat, und den an angenommene Eigenschaften angepassten Referenzantwortsignalen

eingerichtet ist.

Bei der Messeinrichtung kann dann mindestens ein Wellenleiter in dem Behälter oder in einem mit dem Behälter kommunizierenden Behälterabschnitt vorgesehen sein. Der mindestens eine Signalgeber kann dann zum Aussenden der Radarsignale in Längserstreckungsrichtung des Wellenleiters und der Signalempfänger zum Empfangen der reflektierten Antwortsignale an dem Wellenleiter angeordnet sein. Signalgeber und Signalempfänger können dabei z. B. integral mit einer gemeinsamen Antenne/Wellenübergang realisiert werden.

Die Radarsignale können Messpulse, die je nach Art der Wellenleitung auch gleichanteilsbehaftet sein können, oder Wechselspannungssignale ausgewählter Frequenzen vorzugsweise mit Bandbreiten im GHz-Bereich sein, die nach Überführung in den Zeitbereich denen kurzer Messpulse entsprechen.

Die Erfindung wird nachfolgend anhand eines Ausführungsbeispiels mit den beigefügten Zeichnungen näher beschrieben. Es zeigen:

Figur 1     - Skizze eines Behälters mit Schwallrohr und Radarfüllstands- messeinrichtung;
Figur 2     - Skizze einer Radarantenne mit einer Vielzahl von angeregten Feldmoden in einem großen Leitungsabschnitt (rechts) und ei- nem einmodigen Speiseabschnitt (links);
Figur 3     - Flussdiagramm des Verfahrens zur Füllstandsmessung;
Figur 4     - Darstellung eines beispielhaften Antwortsignals und eines Re- ferenzsignals über die Zeit;
Figur 5     - Diagramm der Kreuzkorrelation (bei $\sigma=0$) von einem gemes- senen Antwortsignal und Referenzsignal in Abhängigkeit von der angenommenen Entfernung zur Reflexionsoberfläche;
Figur 6     - Diagramm der Pulsausbreitung von zwei Feldmoden über die Zeit und Entfernung im Nahbereich;
Figur 7     - Diagramm der Pulsausbreitung über die Zeit und Entfernung bei einer Pulsaufteilung in zwei Feldmoden;
Figur 8     - Skizze eines Behälters mit zwei parallel arbeitenden Füll- standsmesseinrichtungen mit zwei zur Messung geeigneten Behälterabschnitten.

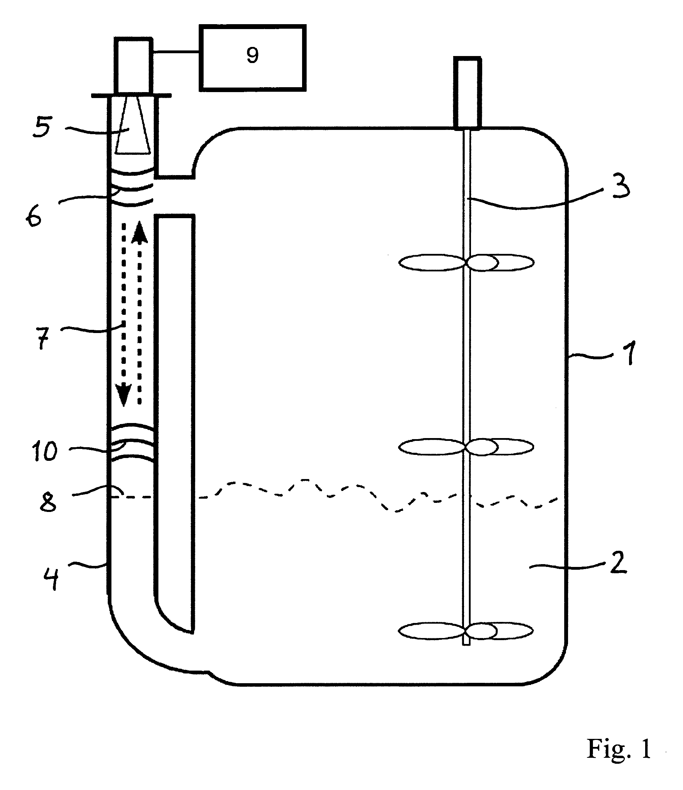

Figur 1 lässt eine Skizze eines Behälters 1 erkennen, in das ein Medium 2 eingebracht ist. Das Medium 2 kann beispielsweise durch ein Rührwerk 3 durchmischt werden. In kommunizierender Verbindung mit dem Behälter 1 steht ein Schwallrohr 4. An der Oberseite des Schwallrohrs 4 ist eine Antenne 5 als Signalgeber und Signalempfänger angeordnet, die z. B. in Form von einer Hornantenne ausgebildet ist. Mit Hilfe der Antenne 5 werden hochfrequente Radarsignale 6 ausgesendet, die sich in mehreren elektromagnetischen Feldmoden in Hauptausbreitungsrichtung 7 in Längsrichtung des Schwallrohrs 4 ausbreiten. Die Ausbreitungsrichtung erfolgt lotrecht auf die Oberfläche 8 des Mediums 2 in dem Schwallrohr 4, der den zur Füllstandsmessung genutzten Behälterabschnitt bildet. Das Radarsignal hat einen Messpuls, der sich in Ausbreitungsrichtung zur Oberfläche des Mediums 8 hin ausbreitet und dort reflektiert wird.

Von dem Signalempfänger, der die Antenne 5 umfasst, werden Antwortpulse auf den Messpuls erfasst, die nicht nur den durch direkte Reflexion des Messpulses in einem spezifischen Feldmode verursachten Antwortpuls enthält, sondern auch Reflexionen und Replika in mehreren Feldmoden. Zudem ist die Form der Antwortpulse im Vergleich zum Messpuls in Abhängigkeit des Ausbreitungsverhaltens (insbesondere der frequenzabhängigen Ausbreitungsgeschwindigkeit) verzerrt. Dies kann insbesondere bei der einmodalen Ausbreitung genutzt werden.

Ein solches mindestens einen durch unterschiedliche Ausbreitungsgeschwindigkeiten charakterisierte Antwortpuls enthaltendes Antwortsignal 10 wird in einer Signalauswerteeinheit zur Bestimmung der Eigenschaft, wie z. B. des Füllstandsniveaus des Mediums 2 in dem Behälter 1 bzw. dem damit kommunizierenden Behälterabschnitt (Schwallrohr 4) ausgewertet.

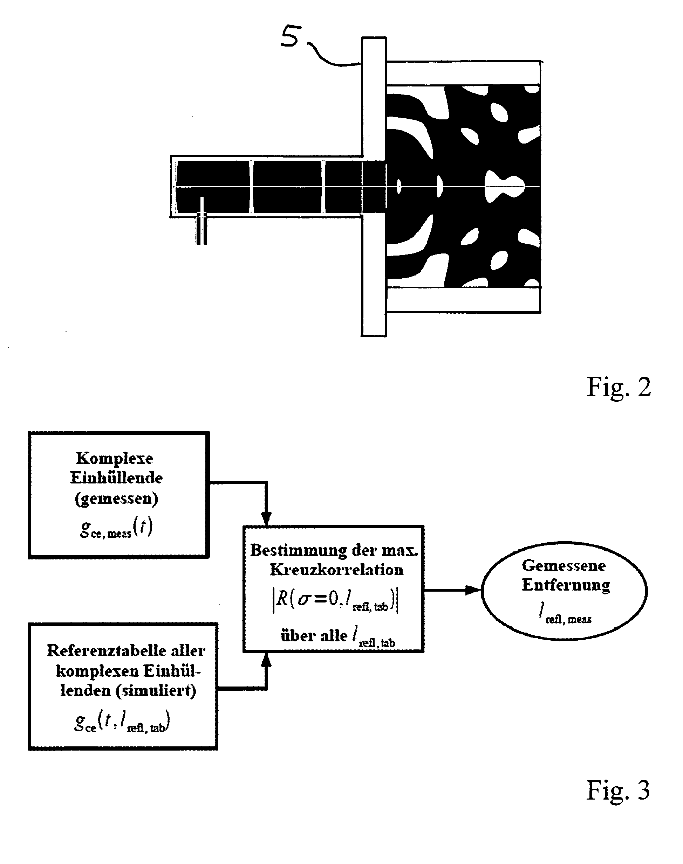

Figur 2 lässt eine Skizze einer denkbar einfachen Antenne 5 mit der elektrischen Feldverteilung in dem Wellenleiter erkennen. Deutlich wird, dass bei dem gestuften Übergang von einem einmodigen Rundhohlleiters kleinen Durchmessers auf einen vielfach übermodeten Rundhohlleiter großen Durchmessers eine Vielzahl von Feldmoden höherer Ordnung auftreten. Ein von der Antenne 5 abgestrahltes Radarsignal hat z. B. die Feldmoden $H_{11}$, $E_{11}$, $H_{12}$, $E_{12}$ und $H_{13}$.

Das elektrische Feld ist in der Einheit V/m skizziert.

Das Verfahren zur Eigenschaftsbestimmung nutzt das Vorhandensein von mehreren, durch unterschiedliche Ausbreitungsgeschwindigkeiten charakterisierte Antwortpulsen und/oder die Pulsverformung auch bei nur einem Antwortpuls im Antwortsignal aus, um die Eigenschaft mit möglichst großer Genauigkeit eindeutig und zuverlässig zu bestimmen. Hierbei wird nicht nur die Laufzeit des mindestens einen Antwortpulses in Bezug auf den Messpuls sondern auch die Form der verzerrten Impulsantworten ausgewertet, deren Energie im Zeitbereich in einer einzigartigen Weise aufgespreizt ist, die eindeutig mit einer zugehörigen Eigenschaft, wie z. B. dem Reflexionsabstand assoziiert ist.

Zur Eigenschaftsbestimmung wird das gemessene Antwortsignal oder die komplexe Einhüllende der Impulsantwort $g_{ce,\,meas}(t)$ mit an angenommene Eigenschaften angepassten Referenzantwortsignalen $g_{ce}(t, l_{refl,\,tab}, \varepsilon, \mu, \kappa)$ korreliert, wobei t die Zeit, $l_{refl,\,tab}$ ein angenommener Reflexionsabstand und $\varepsilon$, $\mu$ die komplexwertige Permittivität bzw. Permeabilität sowie $\kappa$ die Leitfähigkeit des Mediums ist.

Figur 3 lässt den Ablauf des Verfahrens speziell zur Füllstandsmessung (ohne die Eigenschaftsbestimmung der elektromagnetischen Materialparameter des Mediums zu berücksichtigen) erkennen.

In einem Schritt a) wird die komplexe Einhüllende $g_{ce,meas}(t)$ gemessen. In einem vorzugsweise vorbereiteten Schritt b) wird eine Referenztabelle aller komplexen Einhüllenden $g_{ce}(t, l_{ref,tab})$ für verschiedene diskrete Reflexionsabstände simuliert. Anstelle der Simulation der Referenzsignale $g_{ce}(t, l_{refl, tab})$ können auch messtechnisch gewonnene Referenzsignale eingesetzt werden.

In einem Schritt c) erfolgt nun die Bestimmung der maximalen Kreuzkorrelation

$$R(\sigma, l_{refl,tab}) \;=\; \int_{-\infty}^{+\infty} g_{ce}(t+\sigma, l_{refl,tab}) \cdot g_{ce,meas}^{*}(t)\, dt$$

Die Korrelation wird über alle möglichen Füllstandsniveaus bzw. Reflexionslängen $l_{refl,tab}$ durchgeführt. Möglich ist aber auch eine Beschränkung auf einen Füllstandsniveaubereich unter der Annahme, dass Füllstandsniveaus außerhalb des angenommenen, eingeschränkten Füllniveaubereichs nicht plausibel sind. Der Parameter $\sigma$ für die relative Signalverschiebung von Referenzantwortsignalen zu dem gemessenen Antwortsignal kann bei definierter Antennenreferenzebene auf einem festen Wert von z. B. Null gesetzt werden. Bei Übereinstimmung der Referenzebene für Simulation und Messung würde $\sigma=0$ gewählt werden.

Das gemessene Antwortsignal bzw. die komplexe Einhüllende der Impulsantwort $g_{ce,meas}(t)$ sowie das Referenzsignal $g_{ce}(t, l_{refl,tab})$ sollten vor Durchführung der Kreuzkorrelation mit anschließender Auswertung des Betrages der Kreuzkorrelation im Hinblick auf ihrer Signalenergien normalisiert werden, (* bezeichnet die konjugiert-komplexe Einhüllende)

Die gemessene Entfernung $l_{refl,meas}$ (Schritt d)) ergibt sich aus der angenommenen Reflexionsentfernung $l_{refl,tab}$, wenn die im Schritt c) ermittelte Kreuzkorrelation maximal ist:

$$l_{refl,meas} \;=\; \left\{ l_{refl,tab} \in \left\{ 0, \Delta l_{refl,tab}, \ldots, l_{max} \right\} \;\Big|\; \left| R(\sigma=0, l_{refl,tab}) \right| \max \right\}.$$

Bei einer Übereinstimmung der Abstrahlebene für die Simulation und der Messung kann die maximale Ähnlichkeit von Antwortsignal und Referenzantwortsignal für die Quasi-Autokorrelation erwartet werden, d. h. wenn die Entfernung $l_{refl,tab}$ der Referenztabelle mit der aktuellen Reflexionsentfernung $l_{refl}$ in der Messumgebung übereinstimmt. Das globale Maximum der Kreuzkorrelation wird daher bei $\sigma=0$ erwartet, so dass nicht die gesamte Korrelationsfunktion unter Berücksichtigung von Zeitverschiebungen des Antwort- und Referenzsignals berechnet werden muss.

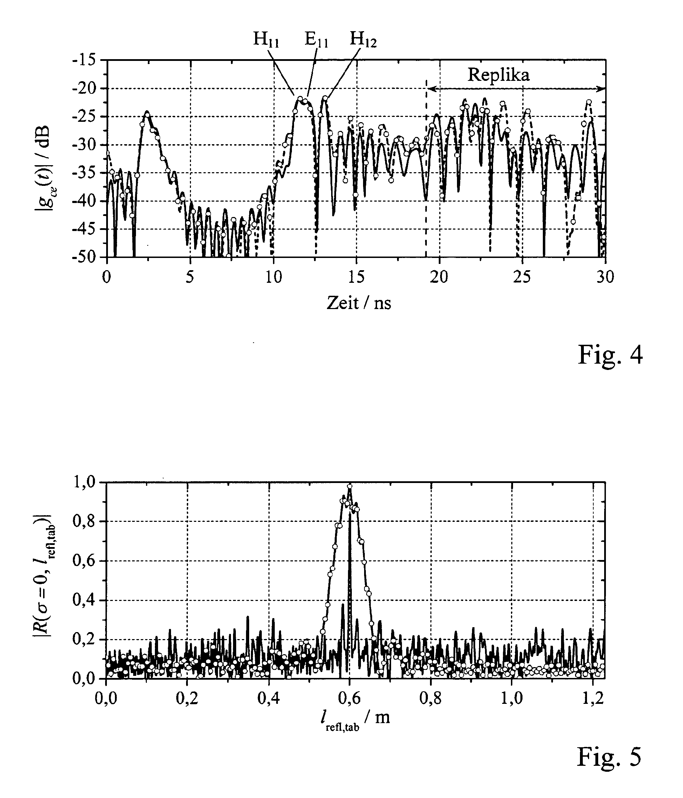

Figur 4 lässt ein beispielhaftes, gemessenes Antwortsignal $g_{ce,meas}(t)$ unter Verwendung des in Figur 2 dargestellten sprunghaften Wellenübergangs als punktpunktgestrichelte Linie sowie ein simuliertes Referenzantwortsignal $g_{ce}(t, l_{refl,tab})$ (durchgezogene Linie) im Zeitbereich für den Fall erkennen, dass der Reflexionsabstand $l_{refl}$ des gemessenen Signals mit dem angenommenen Reflexionsabstand $l_{refl,tab}$ übereinstimmt. Deutlich wird, dass in den verschiedenen Feldmoden $H_{11}$, $E_{11}$ und $H_{12}$ sowie in den Replika eine Vergleichbarkeit der Pulsformen festzustellen ist. Das bedeutet, dass die Korrelation der beiden dargestellten Signale maximal ist.

Figur 5 lässt den Betrag der Kreuzkorrelation für $\sigma=0$ vom gemessenen Antwortsignal und Referenzantwortsignal über den Reflexionsabstand $l_{refl,tab}$ in Metern erkennen. Die durchgezogene Linie zeigt die Korrelation der bei der Auswertung eines Antwortsignals mit mehreren durch unterschiedliche Ausbreitungsgeschwindigkeiten charakterisierten Antwortpulsen, d. h. eines Multimode-Antwortsignals. Die gepunktete Linie zeigt hingegen die Kreuzkorrelation bei einem herkömmlichen Verfahren mit Feldmodenanpassung. Deutlich wird, dass durch die Nutzung eines Multimode-Antwortsignals mit der Kreuzkorrelation ein scharfer Peak im tatsächlichen Reflexionsabstand $l_{refl}$ auftritt.

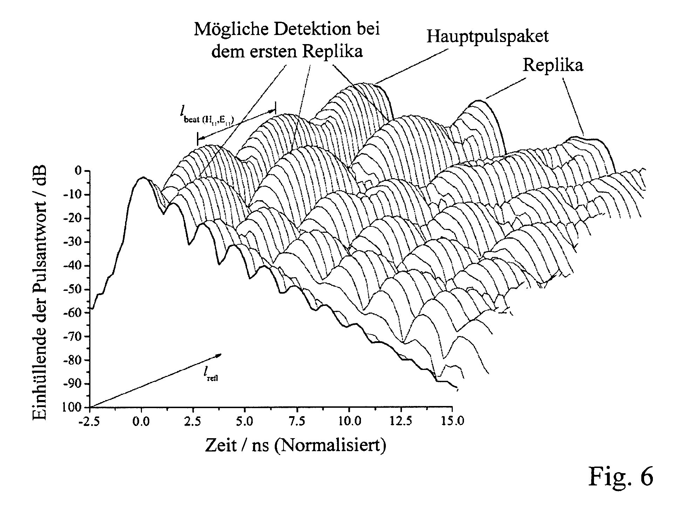

Figur 6 lässt die Einhüllende der Impulsantwort auf einen Messpuls bei definierter Anregung ausschließlich des $H_{11}$ und des $E_{11}$ Feldmodes gleicher Amplitude über die Zeit in Nanosekunden und den Reflexionsabstand $l_{refl}$ im Nahbereich erkennen. Deutlich wird, dass neben dem Hauptpulspaket weitere Replikas detektiert werden können, deren Amplitude mit der des Hauptpulses vergleichbar ist und eine Signalauswertung erschwert.

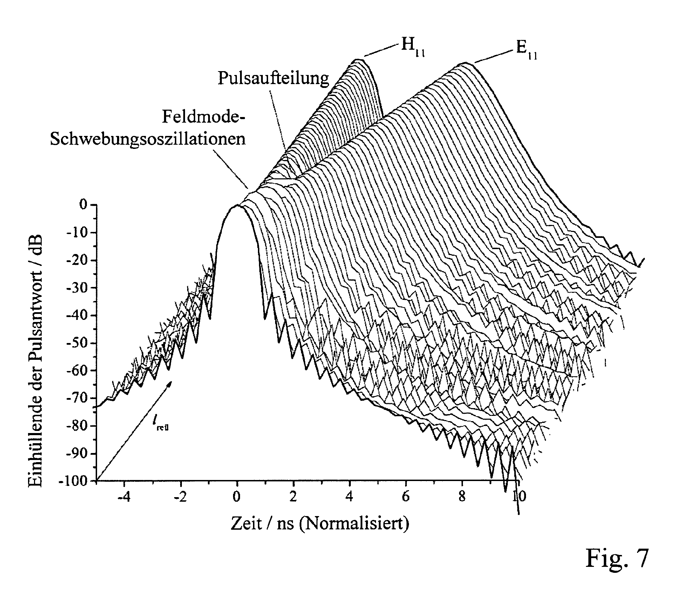

Figur 7 lässt die Einhüllende der Impulsantwort über die Zeit in Nanosekunden und den Reflexionsabstand $l_{refl}$ bei einem Aufteilen des Pulses in zwei Feldmoden $H_{11}$ und $E_{11}$ erkennen, wobei $H_{11}$ ein transversal-elektrischer Feldmode und $E_{11}$ ein transversal-magnetischer Feldmode ist. Das Antwortsignal weist hierdurch zwei durch unterschiedliche Ausbreitungsgeschwindigkeiten in den Feldmoden charakterisierte Antwortpulse auf, wobei die durch Fehlanpassungen bedingten Replika hier zu Darstellungszwecken explizit ausgeschlossen wurden. Form und Lage der Antwortpulse im Antwortsignal sind von der Laufzeit abhängig.

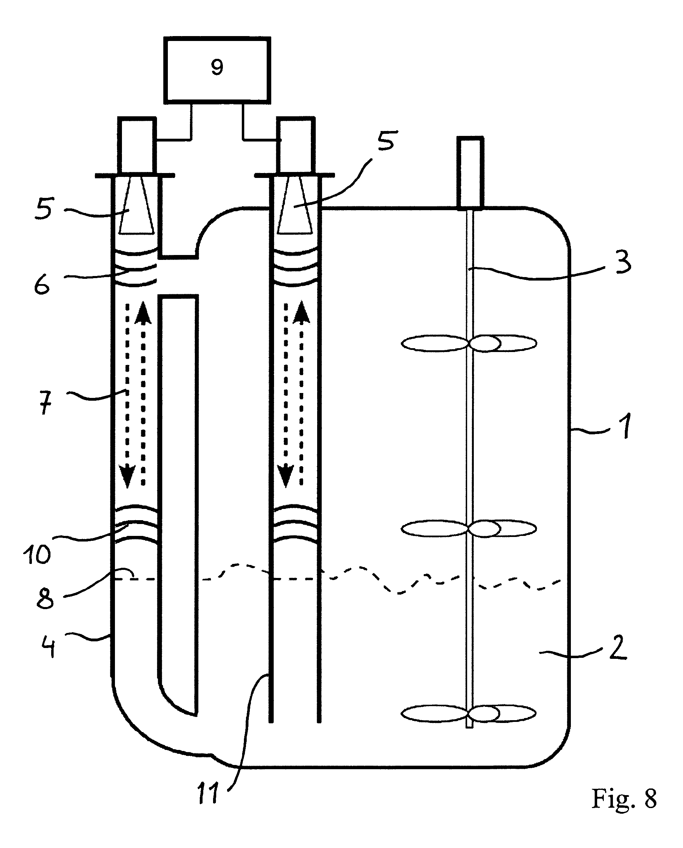

Anstelle der Füllstandsmessung mit Hilfe eines Multimode-Antwortsignals aufgrund eines einzigen hochfrequenten Radarsignals kann auch eine parallele Messung in zwei Behälterabschnitten des Behälters 1 erfolgen, wie in Figur 8 skizziert ist. Ein Behälterabschnitt kann beispielsweise das Schwallrohr 4 sein, während eine zweite Messung in einem weiteren Behälterabschnitt 9 innerhalb des Behälters 1 oder in einem weiteren Schwallrohr 4 oder einem Wellenleiter durchgeführt wird. Die beiden parallelen Messungen unterscheiden sich durch unterschiedliches Ausbreitungsverhalten der Radarsignale in den beiden Behälterabschnitten 4 und 9. Das unterschiedliche Ausbreitungsverhalten kann eine durch unterschiedliche Feldmoden und/oder eine unterschiedliche Geometrie der Behälterabschnitte bzw. Wellenleiter bedingte unterschiedliche Ausbreitungsgeschwindigkeit sein.

Denkbar ist z. B., dass das dispersive Ausbreitungsverhalten in den Behälterabschnitten 4 und 9 unterschiedlich ist. Z. B. bei der Nutzung von TEM-Wellen für die Radarmessung (Transversal Elektromagnetischer Modus) liegen dann zwei Antwortsignale vor, die durch das jeweilige Ausbreitungsverhalten im zugehörigen Behälterabschnitt charakterisierte Antwortpulse aufweist. Aufgrund der beiden unterschiedlichen Ausbreitungsverhalten in den beiden Behälterabschnitten 4 und 9 unterscheiden sich Laufzeit und Form der Antwortpulse der beiden Antwortsignale durch ihre unterschiedlichen Ausbreitungsgeschwindigkeiten voneinander.

Es ist aber auch denkbar, dass ein identischer Behälterabschnitt mit mindestens zwei Radarsignalen voneinander unabhängig angeregt wird, wobei sich die Ausbreitungsgeschwindigkeit der Radarsignale und zugehörigen Antwortsignale durch ihre Ausbreitungsgeschwindigkeit aufgrund unterschiedlicher Feldmoden voneinander unterscheidet.

Die in den oben beschriebenen Ausführungsformen erfassten mehreren Antwortsignale können dann jeweils mit geeigneten Referenzantwortsignalen korreliert werden, um anschließend die hieraus bestimmten Reflexionsabstände bzw. Füllstandsniveaus z. B. durch Mittelwertbildung zusammenzuführen. Möglich ist aber auch, die Antwortpulse der beiden Antwortsignale in ein gemeinsames Signal zusammenzuführen und dieses Signal dann mit einem geeigneten Referenzsignal zu korrelieren, um hieraus einen genauen Reflexionsabstand zu bestimmen.

Auch bei diesem Verfahren wird die Existenz mehrerer Antwortpulse ausgenutzt, die sich durch unterschiedliche Ausbreitungsgeschwindigkeiten unterscheiden.

Neben der Bestimmung des Füllstandsniveaus bieten die beschriebenen Ausführungsformen des Verfahrens die Möglichkeit der Bestimmung charakteristischer elektromagnetischer Eigenschaften, wie die komplexwertige Permittivität $\varepsilon$ bzw. Permeabilität $\mu$ sowie $\kappa$ die Leitfähigkeit des Mediums oder der Medien. Es ist aber auch denkbar, aus den elektromagnetischen Medieneigenschaften anderen Parameter, wie Dichte, Druck, Temperatur oder Hallkonstante o. ä. abzuleiten.

Unter Umständen ist zur Bestimmung einer Eigenschaft die Kenntnis einer anderen Eigenschaft, wie z. B. dem Füllstandsniveau, erforderlich. Nach Bestimmung einer ersten Eigenschaft kann durch weitergehende Auswertung der Signalähnlichkeit anderer Antwortpulse als Reflexion in anderen Bereichen oder Replika mindestens eine weitere Eigenschaft bestimmt werden.

So ist es z. B. möglich bei einer Messung von oben anhand des durch Reflexion an der Oberfläche verursachten mindestens einen Antwortpulses das Füllstandsniveau festzustellen. In Kenntnis des Füllstandsniveaus und ggf. des hieraus ableitbaren Volumens des Mediums kann anhand der durch Reflexion am Behälterboden verursachten Antwortpulse auf Materialparameter des Mediums geschlossen werden, die das Ausbreitungsverhalten der Mess- und Antwortpulse im Medium beeinflussen.

**Patentansprüche**

1. Verfahren zur Bestimmung mindestens einer Eigenschaft mindestens eines Mediums (2) mittels Radarmessung durch

   - Aussenden mindestens eines Radarsignals (6) in mindestens einen das Medium (2) enthaltenen Behälterabschnittes (4, 9),
   - Empfangen mindestens eines Antwortsignals (10) als Reflexion eines zugeordneten Radarsignals (6), und
   - Bestimmen der Eigenschaft des mindestens einen Mediums (2) in Abhängigkeit von charakteristischen Eigenschaften des mindestens einen Antwortsignals (10) in Bezug auf das zugehörige Radarsignal (6),

   **gekennzeichnet durch**

   - Bestimmen der Signalähnlichkeit zwischen dem mindestens einen Antwortsignal (10) und zugeordneten Referenzantwortsignalen und
   - Bestimmen der mindestens einen Eigenschaft in Abhängigkeit der Signalähnlichkeit zwischen dem jeweiligen mehrere Antwortpulse aufweisenden Antwortsignal (10), wobei die Antwortpulse eine aufgrund unterschiedlicher Ausbreitungsgeschwindigkeiten charakteristische Laufzeitverschiebung in Bezug auf das Radarsignal (6) aufweisen, und/oder mindestens einen Antwortpuls aufweisenden Antwortsignal (10), wobei der mindestens eine Antwortpuls eine in Abhängigkeit von der mindestens einen Eigenschaft in Bezug auf einen ursächlichen Radarpuls verzerrte Form hat, und den an angenommene Eigenschaften angepassten Referenzantwortsignalen.

2. Verfahren nach Anspruch 1, **dadurch gekennzeichnet, dass** Eigenschaften des mindestens einen Mediums das Füllstandsniveau in dem jeweiligen Behälterabschnitt und/oder elektromagnetische Parameter des mindestens einen Mediums sind.

3. Verfahren nach Anspruch 1 oder 2, **dadurch gekennzeichnet, dass** bei der Bestimmung der Signalähnlichkeit die Antwortsignalabschnitte berücksichtigt werden, die durch Reflexionen des Radarsignals auf der auf einem Füllstandsniveau befindlichen Oberfläche des Mediums beeinflusste Antwortpulse enthalten.

4. Verfahren nach einem der Ansprüche 1 bis 3, **dadurch gekennzeichnet, dass** bei der Bestimmung der Signalähnlichkeit die Antwortsignalabschnitte berücksichtigt werden, die durch Reflexionen des Radarsignals an Trennschichten zwischen mehreren geschichteten Medien und/oder an im Behälterabschnitt angeordneten Reflektoren, wie beispielsweise dem Boden des Behälterabschnitts beeinflusste Antwortpulse enthalten.

5. Verfahren nach einem der vorhergehenden Ansprüche, **dadurch gekennzeichnet, dass** sich das Radarsignal in dem Behälterabschnitt (4, 9) in mehreren Moden des elektromagnetischen Feldes ausbreitet und ein Antwortsignal (10) mehrere Antwortpulse aufweist, die durch unterschiedliche Ausbreitungsgeschwindigkeiten der Moden-abhängigen Signalanteile des Radarsignals (6) charakterisiert sind, wobei die Signalähnlichkeit zwischen dem mehrere Antwortpulse aufweisenden Antwortsignal (10) und an angenommene Eigenschaften angepassten Multimode-Referenzantwortsignalen bestimmt und auf die Eigenschaften geschlossen wird, die dem bestmöglich angepassten Referenzantwortsignal zugrundeliegen.

6. Verfahren nach einem der vorhergehenden Ansprüche, **gekennzeichnet durch** Aussenden von mindestens zwei sich voneinander unterschiedlich ausbreitenden Radarsignalen (6) in mindestens einen Behälterabschnitt (4, 6) und Bestimmen der Eigenschaften aus der Gesamtheit der jeweils mindestens einen Antwortpuls enthaltenden Antwortsignale (10) anhand der Signalähnlichkeit zwischen den Antwortsignalen (10) und jeweiligen, an angenommene Eigenschaften angepassten Referenzantwortsignalen und Schließen auf die Eigenschaften, die dem bestmöglich angepassten Referenzantwortsignalen zugrunde liegen.

7. Verfahren nach Anspruch 6, **dadurch gekennzeichnet, dass** sich die mindestens zwei Radarsignale (6) durch ihre Feldmoden voneinander unterscheiden.

8. Verfahren nach Anspruch 6 oder 7, **dadurch gekennzeichnet, dass** Radarsignale (6) in mindestens zwei Behälterabschnitte (4, 9) ausgesendet werden, wobei die Ausbreitungsgeschwindigkeit der Radarsignale (6) in den mindestens zwei Behälterabschnitten (4, 9) aufgrund einer unterschiedlichen Ausbildung der Behälterabschnitte (4, 9) voneinander unterschiedlich ist.

9. Verfahren nach einem der Ansprüche 6 bis 8, **dadurch gekennzeichnet, dass** die Antwortsignale (10) voneinander unabhängig jeweils durch Bestimmen der Signalähnlichkeiten mit zugeordneten Referenzantwortsignalen ausgewertet werden.

10. Verfahren nach einem der Ansprüche 6 bis 8, **dadurch gekennzeichnet, dass** die Antwortsignale (10) zu einem Gesamtsignal zusammengeführt und das Gesamtsignal durch Bestimmen der Signalähnlichkeit mit zugeordneten Referenzantwortsignalen ausgewertet wird.

11. Verfahren nach einem der vorhergehenden Ansprüche, **dadurch gekennzeichnet, dass** das Aussenden der Radarsignale (6) in einem einen Wellenleiter bildenden oder einen Wellenleiter enthaltenen Behälterabschnittes (4, 9) erfolgt.

12. Verfahren nach einem der vorhergehenden Ansprüche, **dadurch gekennzeichnet, dass** als Behälterabschnitt (4, 9) ein mit dem das mindestens eine Medium (2) enthaltenen Behälter (1) kommunizierendes Schwallrohr (4) gewählt wird und das Aussenden der Radarsignale (6) in Längserstreckungsrichtung des Schwallrohres (4) im Innenraum des Schwallrohres (4) erfolgt.

13. Messeinrichtung zur Bestimmung mindestens einer Eigenschaft mindestens eines Mediums (2) mit mindestens einem Signalgeber zum Aussenden von Radarsignalen (6) in jeweils einen das mindestens eine Medium (2) enthaltenen Behälterabschnittes (4, 9), mit mindestens einem Signalempfänger zum Empfangen mindestens eines Antwortsignals (10) auf die ausgesendeten Radarsignale (6), und mit mindestens einer Signalauswerteeinheit (11) zum Bestimmen mindestens einer Eigenschaft des mindestens einen Mediums (2) in Abhängigkeit von charakteristischen Eigenschaften des mindestens einen Antwortsignals (10) in Bezug auf das zugehörige Radarsignal (6) **dadurch gekennzeichnet, dass** die Signalauswerteeinheit (11) zur Durchführung des Verfahrens nach einem der vorhergehenden Ansprüche mit den Schritten:

- Bestimmen der Signalähnlichkeit zwischen dem mindestens einen Antwortsignal (10) und zugeordneten Referenzantwortsignalen und
- Bestimmen der mindestens einen Eigenschaft in Abhängigkeit der Signalähnlichkeit zwischen dem jeweiligen mehrere Antwortpulse aufweisenden Antwortsignal (10), wobei die Antwortpulse eine aufgrund unterschiedlicher Ausbreitungsgeschwindigkeiten charakteristische Laufzeitverschiebung in Bezug auf das Radarsignal (6) aufweisen, und/oder mindestens einen Antwortpuls aufweisenden Antwortsignal (10), wobei der mindestens eine Antwortpuls eine in Abhängigkeit von der mindestens einen Eigenschaft in Bezug auf einen ursächlichen Radarpuls verzerrte Form hat, und den an angenommene Eigenschaften angepassten Referenzantwortsignalen eingerichtet ist.

**14.** Messeinrichtung nach Anspruch 13, **dadurch gekennzeichnet, dass** mindestens ein Wellenleiter in dem Behälter (1) oder in einem mit dem Behälter (1) kommunizierenden Behälterabschnitt (4) vorgesehen ist und der mindestens eine Signalgeber zum Aussenden der Radarsignale (6) in Längserstreckungsrichtung des Wellenleiters und der Signalempfänger an dem Wellenleiter zum Empfangen der reflektierten Antwortsignale (10) angeordnet ist.

**Geänderte Patentansprüche gemäss Regel 137(2) EPÜ.**

**1.** Verfahren zur Bestimmung mindestens einer Eigenschaft mindestens eines Mediums (2) mittels Radarmessung durch

- Aussenden mindestens eines Radarsignals (6) in mindestens einen das Medium (2) enthaltenen Behälterabschnittes (4, 9),
- Empfangen mindestens eines Antwortsignals (10) als Reflexion eines zugeordneten Radarsignals (6), und
- Bestimmen der Eigenschaft des mindestens einen Mediums (2) in Abhängigkeit von charakteristischen Eigenschaften des mindestens einen Antwortsignals (10) in Bezug auf das zugehörige Radarsignal (6), **gekennzeichnet durch**
- Bestimmen der Signalähnlichkeit zwischen dem mindestens einen Antwortsignal (10) und zugeordneten Referenzantwortsignalen unter Berücksichtigung von Antwortsignalabschnitten, die **durch** Reflexionen des Radarsignals beeinflusste Antwortpulse enthalten und
- Bestimmen der mindestens einen Eigenschaft in Abhängigkeit der Signalähnlichkeit zwischen dem jeweiligen mehrere Antwortpulse aufweisenden Antwortsignal (10), wobei die Antwortpulse eine aufgrund unterschiedlicher Ausbreitungsgeschwindigkeiten charakteristische Laufzeitverschiebung in Bezug auf das Radarsignal (6) aufweisen, und/oder mindestens einen Antwortpuls aufweisenden Antwortsignal (10), wobei der mindestens eine Antwortpuls eine in Abhängigkeit von der mindestens einen Eigenschaft in Bezug auf einen ursächlichen Radarpuls verzerrte Form hat, und den an angenommene Eigenschaften angepassten Referenzantwortsignalen.

Fig. 1

Fig. 2

Komplexe
Einhüllende
(gemessen)

$g_{ce,meas}(t)$

Bestimmung der max.
Kreuzkorrelation

$\left| R(\sigma = 0, l_{refl,tab}) \right|$

über alle $l_{refl,tab}$

Gemessene
Entfernung

$l_{refl,meas}$

Referenztabelle aller
komplexen Einhüllenden (simuliert)

$g_{ce}(t, l_{refl,tab})$

Fig. 3

Fig. 4

Fig. 5

Fig. 6

Fig. 7

Fig. 8

Europäisches
Patentamt

European
Patent Office

Office européen
des brevets

# EUROPÄISCHER RECHERCHENBERICHT

**Nummer der Anmeldung**

EP 09 01 2191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 198 45 116 C1 (SIEMENS AG [DE]) 30. Dezember 1999 (1999-12-30) * Spalte 3, Zeile 55 - Spalte 4, Zeile 29 * * Abbildungen * ----- | 1-4, 13-14 | INV. G01F23/284 |
| A,D | ARMBRECHT G ET AL: "Compact mode-matched excitation structures for radar distance measurements in overmoded circular waveguides" ADVANCES IN RADIO SCIENCE, Bd. 6, 2008, Seiten 9-17, XP002572594 * das ganze Dokument * ----- | 1-14 | |
| A,D | POHL N ET AL: "High Precision Radar Distance Measurements in Overmoded Circular Waveguides" IEEE TRANSACTIONS ON MICROWAVE THEORY AND TECHNIQUES, Bd. 55, Nr. 6, 1. Juni 2007 (2007-06-01), Seiten 1374-1381, XP011185157 ISSN: 0018-9480 * das ganze Dokument * ----- | 1-14 | |
| T | ECKHARD DENICKE ET AL: "A correlation-based method for precise radar distance measurements in dispersive waveguides" PROC. OF THE 6TH EUROPEAN RADAR CONFERENCE, EURAD 2009., 30. September 2009 (2009-09-30), Seiten 302-305, XP031558272 ISBN: 978-1-4244-4747-3 * das ganze Dokument * ----- | | |

**RECHERCHIERTE SACHGEBIETE (IPC)**

G01F

Der vorliegende Recherchenbericht wurde für alle Patentansprüche erstellt

| Recherchenort | Abschlußdatum der Recherche | Prüfer |
|---|---|---|
| Den Haag | 11. März 2010 | Kloppenburg, Martin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes
    Dokument

EPO FORM 1503 03.82 (P04C03)

EP 2 302 338 A1

**ANHANG ZUM EUROPÄISCHEN RECHERCHENBERICHT**
**ÜBER DIE EUROPÄISCHE PATENTANMELDUNG NR.**

EP 09 01 2191

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-2010

| Im Recherchenbericht angeführtes Patentdokument | Datum der Veröffentlichung | Mitglied(er) der Patentfamilie | Datum der Veröffentlichung |
|---|---|---|---|
| DE 19845116 C1 | 30-12-1999 | KEINE | |

Für nähere Einzelheiten zu diesem Anhang : siehe Amtsblatt des Europäischen Patentamts, Nr.12/82

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007010468 A1
- DE 102007007024 A1
- DE 102007010627 A1
- DE 202008016100 U1

**In der Beschreibung aufgeführte Nicht-Patentliteratur**

- **G. Armbrecht ; E. Denicke ; I. Rolfes ; N. Pohl ; T. Musch ; B. Schiek.** Compact mode-matched excitation structures for radar distance measurements in overmoded circular waveguides. *Advances in Radio Science,* 2008, vol. 6, 9-17
- **B. Sai ; B. Kastelein.** Advanced High Radar Gauge for Industrial Applications. *International Conference on Radar, 2006, CIE'06,* 2006, 1-4
- **N. Pohl ; M. Gerding ; B. Will ; T. Musch ; J. Hausner.** High Precision Radar Distance Measurements in Overmoded Circular Waveguides. *IEEE Transactions on Microwave Theory and Techniques,* Juni 2007, vol. 55 (6), 1374-1380